# EUROPÄISCHE PATENTSCHRIFT

(11) **EP 2 974 581 B1**
(45) Veröffentlichungstag und Bekanntmachung des Hinweises auf die Patenterteilung: **01.03.2017**
(21) Anmeldenummer: 15401074.8
(22) Anmeldetag: 09.07.2015
(51) Int. Cl.: A01B 3/42, A01B 3/421, A01B 3/46

(54) **DREHPFLUG**
REVERSIBLE PLOUGH
CHARRUE BRABANT

(30) Priorität: 18.07.2014 DE 102014110100
(43) Veröffentlichungstag der Anmeldung: 20.01.2016
(73) Patentinhaber: Amazonen-Werke H. Dreyer GmbH & Co. KG, 49205 Hasbergen (DE)
(72) Erfinder: Laumann, Bernhard, 48477 Hörstel - Riesenbeck (DE)

(56) Entgegenhaltungen:
- EP-A1- 0 839 442
- EP-A1- 1 731 009
- EP-A1- 2 220 922
- DE-A1- 2 850 118
- DE-A1-102005 037 852
- DE-U1- 9 014 319
- DE-U1-202011 101 162
- GB-A- 950 912

## Beschreibung

Die Erfindung bezieht sich auf einen Drehpflug mit einem an einem Anbaubock zur Verbindung des Drehpfluges mit einem landwirtschaftlichen Zugfahrzeug abstützbaren, dreh- und/oder schwenkbar ausgebildeten Pflugrahmen und mit auf gegenüberliegenden Seiten des Pflugrahmens angeordneten Pflugscharreihen mit Pflugkörpern, wobei durch eine über eine Antriebsvorrichtung eingeleitete Drehbewegung des Pflugrahmens wahlweise die eine oder die andere Pflugscharreihe in ihre Betriebsstellung oder in ihre Außerbetriebsstellung überführbar ist und mit einem den Pflugrahmen in der Betriebsstellung der einen Pflugscharreihe und in den Pflugrahmen in der Betriebsstellung der anderen Pflugscharreihe auf dem Erdboden abstützenden, über ein Fahrgestell mit dem Pflugrahmen verbundenen Stützrad, wobei das Fahrgestell des Stützrades über einen Stabilisator mit dem Anbaubock kardanisch verbunden ist und der Pflugrahmen um eine Dreh- oder Schwenkachse um den Stabilisator und das Fahrgestell und das Stützrad verschwenkbar ist.

Drehpflüge der vorgenannten Art, die eine feste Verbindung über den Anbaubock mit der Dreipunkthydraulik eines landwirtschaftlichen Schleppers aufweisen, können über diese Dreipunkthydraulik des landwirtschaftlichen Schleppers angehoben werden.

Über das Stützrad mit seinem mit dem Pflugrahmen verbundenen Fahrwerk ist der Drehpflug über das aktive Stützrad abzustützen, das ca. 50 % der Auflagelast des Pfluges übernimmt. Demgegenüber hat bei einem Aufbaupflug ohne aktives Stützrad die Dreipunkthydraulik des landwirtschaftlichen Schleppers die gesamte Auflagelast des Pfluges aufzunehmen. Bei einem Aufsattelpflug, bei dem keine feste Verbindung zwischen der Dreipunkthydraulik des Schleppers besteht, hat das Fahrgestell mit dem Stützrad 100 % der Auflagelast zu übernehmen. Drehpflüge der eingangs genannten Art stellen daher eine Kombination eines Anbaupfluges und eines Aufsattelpfluges dar und werden auch als Hybridpflüge bezeichnet.

Ein derartiger Hybridpflug ist aus der EP 1 731 009 A1 bekannt, bei dem zur Stabilisierung des Pflugrahmens im hinteren Bereich des Drehpfluges ein Stabilisator vorgesehen ist, der das Fahrwerk des Stützrades mit dem Anbaubock verbindet, wobei der Stabilisator kardanisch mit dem Anbaubock verbunden ist. Im praktischen Einsatz können die Pflugscharreihen um das Fahrwerk mit dem Stützrad und den Stabilisator verschwenkt werden, so dass die eine Pflugscharreihe nach einer Verschwenkbewegung in ihre Betriebsstellung gelangt und nach einer gegensinnigen Verschwenkbewegung die andere.

Nachteilig bei dem Drehpflug nach der EP 1 731 009 A1 ist die mangelnde Bodenfreiheit des Drehpfluges durch die Ausbildung des Stabilisators, der abgeknickt ausgebildet ist und sowohl in der Betriebsstellung der jeweiligen Pflugscharreihe als auch in deren Transportstellung einen Abstand zum Erdboden aufweist, der in vielen nicht Fällen ausreicht, und mithin Transportfahrten aber auch Arbeitsfahrten des Drehpfluges nachteilig beeinflusst.

Es ist Aufgabe der Erfindung, diesen Nachteil zu beheben und einen Drehpflug der eingangs genannten Art zur Verfügung zu stellen, bei dem die Bodenfreiheit des Pfluges sowohl während einer Transportfahrt als auch während einer Arbeitsfahrt vergrößert ist.

Zur Lösung dieser Aufgabe zeichnet sich der Drehpflug der eingangs genannten Art dadurch aus, dass der Stabilisator zweigeteilt ausgebildet ist mit einem geradlinig ausgebildeten Stabilisator und mit einem einen Stirnrad-, Ketten- oder Riementrieb aufweisenden Stabilisatorteil ausgebildet ist, wobei das Stabilisatorelement und das Stabilisatorteil in etwa einen gleichen Höhenabstand zum Erdboden aufweist wie der Pflugrahmen in seiner Arbeitsstellung.

Damit ist ein Drehpflug geschaffen, bei dem eine geknickte Ausbildung des Stabilisators in keinem Betriebszustand vorliegt, da das dem Fahrgestell benachbarte Stabilisierungselement geradlinig ausgebildet sein kann und genauso geradlinig der Stirnrad-, Ketten- oder Riementrieb als Stabilisatorteil ausgebildet ist, so dass sich diese in einer gemeinsamen Horizontalebene, bezogen auf ihre mittlere horizontal ausgerichteten Querschnittsebenen, erstrecken, und diese somit in einem übereinstimmenden Höhenniveau mit dem die Pflugscharreihen tragenden Pflugrahmen angeordnet sind. Damit haben sie einen gleichen Höhenabstand zum Erdboden hin während einer Arbeits-, aber auch während einer Transportfahrt, so dass sich eine mangelnde Bodenfreiheit durch diese Art der Ausgestaltung des Stabilisators gar nicht erst ergibt. Gleichwohl bleiben die Vorteile eines Hybridpfluges erhalten.

Eine einfache Ausgestalltung des erfindungsgemäßen Stabilisatorelementes läßt sich dadurch erreichen, dass das Stabilisatorelement als starres Stabilisatorelement ausgebildet ist und mit seitlichem Lageabstand neben dem die Pflugscharreihen tragenden Pflugrahmen in der Betriebsstellung der Teile angeordnet ist.

Um das Stabilisatorelement in einfacher Weise mit dem Stirnrad-, Riemen- oder Kettentrieb drehfest verbinden zu können, ist vorgesehen, dass das Stabilisatorelement an einem Auslegerarm des Pflugrahmens über ein Kreuz- oder Kugelgelenk, insbesondere Kardangelenk angreift und an dem Anbaubock diametral dem Gelenk gegenüberliegend angeordnet ein Teil des Stirnrad-, Riemen- oder Kettentriebes vorgesehen ist.

Um das Stützrad beim den Drehvorgang in der vorgesehen Position in einfacher halten zu können, ist vorgesehen, dass der Stirnrad-, Riemen- oder Kettentrieb zumindest zwei mit Abstand zueinander angeordnete Zahnräder aufweist, wobei eines der Zahnräder mit dem Pflugrahmen um die Dreh- bzw. Schwenkachse bei Verschwenken des Pflugrahmens mit verschwenkt wird.

Die drehfeste Zuordnung wird in einer einfachen Ausgestaltung dadurch erreicht, dass die Zahnräder über Stirnräder, eine Zahnkette oder einen Zahnriemen miteinander in Antriebsverbindung und/oder verbunden sind und eines der Zahnräder dem Stabilisatorelement und ein anderes Zahnrad dem Pflugrahmen zugeordnet ist.

Wesentliche weitere Ausgestaltungen sind weiteren Unteransprüchen, der nachfolgenden Beschreibung und der Zeichnung zu entnehmen.

In der Zeichnung zeigen
- Fig. 1: in einer schematischen Seitenansicht (perspektivisch) ein Ausführungsbeispiel der Erfindung;
- Fig. 2: ausschnittsweise eine Vorderansicht (perspektivisch) auf das Ausführungsbeispiel nach der Erfindung (vergrößert),
- Fig. 3: ausschnittsweise in einer perspektivischen Seitenansicht in einer Ansicht schräg von hinten auf den vorderen Bereich des Drehpfluges,
- Fig. 4: in einer weiteren schematischen Seitenansicht (perspektivisch) ein weiteres Ausführungsbeispiel der Erfindung;
- Fig. 5: ausschnittsweise eine Vorderansicht (perspektivisch) auf das Ausführungsbeispiel nach der Erfindung (vergrößert) gemäß Fig.4, und
- Fig. 6: ausschnittsweise in einer perspektivischen Seitenansicht in einer Ansicht schräg von hinten auf den vorderen Bereich des Drehpfluges gemäß Fig.4.

In der Zeichnung sind übereinstimmende Teile mit übereinstimmenden Bezugsziffern versehen.

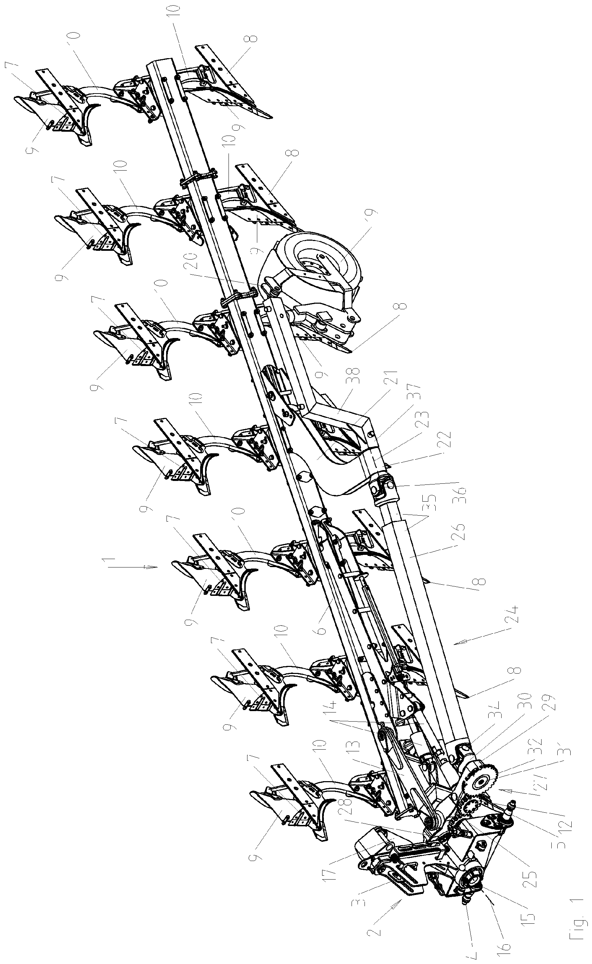

In Fig. 1 ist ein allgemein mit 1 bezifferter Drehpflug gezeigt, der über einen Anbaubock 2 an die hydraulisch zu betätigende Dreipunktkupplung eines nicht gezeigten Schleppers anzuhängen ist und von diesem während der Arbeitsfahrt gezogen werden kann. Über die nicht gezeigte Dreipunkthydraulik des Schleppers ist der gezeigte Drehpflug in bekannter Weise anzuheben und auch wieder abzusenken.

Die Anlenkstellen an dem Anbaubock 2 für die Dreipunkthydraulik des landwirtschaftlichen Schleppers sind mit 3, 4 und 5 beziffert. Der Pflugrahmen 6 trägt gegenüberliegende Pflugscharreihen 7 und 8 mit insgesamt in jeder Pflugscharreihe 7 bzw. 8 sieben Pflugkörpern 9, die über Haltearme 10 am Pflugrahmen 11 abgestützt sind. Der Pflugrahmen 11 ist an dem drehbar angeordneten Auslegerarm 12 über verstellbare Lenker 13 angelenkt, hierüber ist der Pflug in bekannter und daher nicht näher beschriebener Weise in seiner Arbeitsweise und Arbeitsbreite mittels der Einstellmittel 14 einzustellen. Der Auslegerarm 12 ist über seine Drehwelle 15 in dem Drehlager des Anbaubockes 2 um die Drehachse 16 um 180° verdrehbar gelagert. Zum Verdrehen des Pflugrahmens 6 mit den in gegenüberliegenden Pflugscharreihen 7 und 8 angeordneten Pflugkörpern 9 werden die jeweiligen Pflugkörper 9 der Pflugscharreihen 7 und 8 durch die Hydraulikzylinder 17 und 18, die zwischen dem oberen Ende des Anbaubockes 2 und dem einen Ende des Auslegerarmes 12 angeordnet sind, in die jeweilige Arbeitsposition in nach beschriebener Weise verschwenkt.

Zusätzlich ist ein Stützrad 19 vorgesehen, welches an einem Fahrwerk 20 abgestützt ist. Dieses Fahrwerk 20 ist über einen weiteren Anbaubock 21 mit dem Pflugrahmen 6 verbunden, wobei der Anbaubock 21 ein Gelenk 22 mit einer Gelenkachse 23 aufweist. Der Pflugrahmen 6 mit seinen in den Pflugscharreihen 7 und 9 angeordneten Pflugkörpern 9, ist insbesondere beim Wenden am Feldende in die jeweilige Position zu verschwenken, so dass das Fahrgestell 20 und das Stützrad 19 auch während und nach einem Schwenkvorgang in ihrer Position verbleiben, wenn der Pflugrahmen 6 um die Drehachse 16 und im Bereich des Fahrgestelles 20 und das Stützrad 18 um die Gelenkachse 23 von einer Betriebsstellung in die andere verschwenkt wird, ist der Stabilisator 24 vorgesehen.

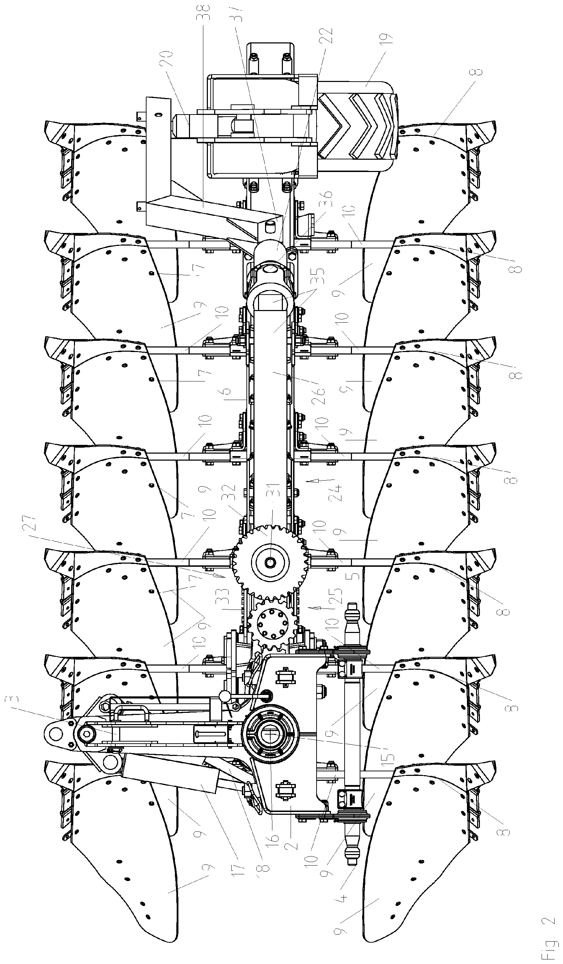

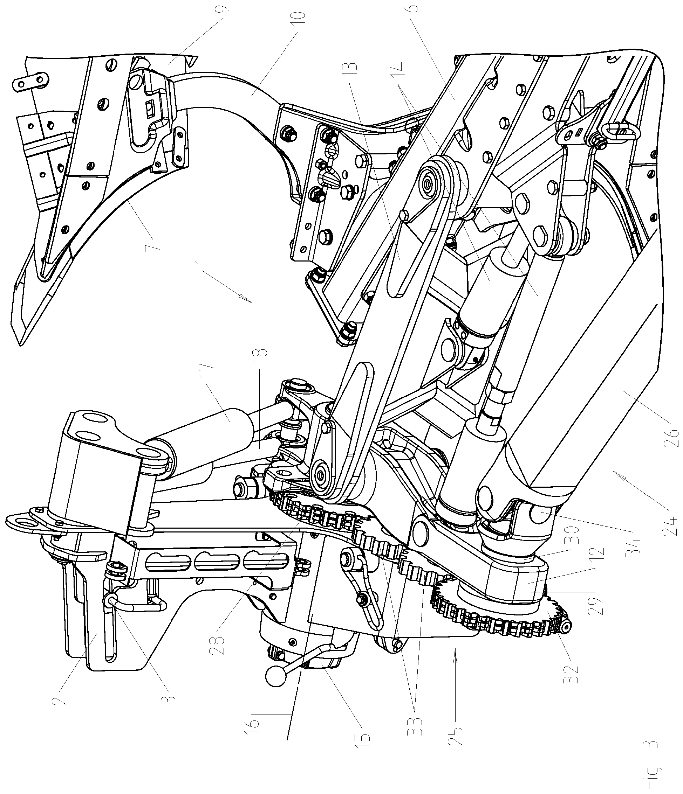

Um den vorbeschrieben Schwenkvorgang des Pflugrahmens 6 mit seinen Pflugscharreihen 7 und 8 und dem Verbleiben des Stützrades 19 in seiner Stützposition durchführen zu können, ist zwischen dem Anbaubock 2 und dem Stützrad 19 der Stabilisator 24 angeordnet. Der in dem in den Fig.1 bis 3 gezeigten Ausführungsbeispiel dargestellte Stabilisator 24 besteht im Wesentlichen aus den beiden drehfest miteinander verbundenen Stabilisatorelementen 25 und 26. Das erste Stabilisatorelement 25 besteht aus einem Stirnradtrieb 27. Das erste Stirnrad 28 des Stirnradtriebes 27 ist drehfest an dem Anbaubock 2 befestigt, wobei die Mittelachse dieses ersten Stirnrades 28 mit der Drehachse 16 der des Drehlagers für die Drehwelle 15 zusammenfällt. An dem äußeren Ende 29 des Auslegerarmes 12 befindet sich ein erstes Stabilisatorlager 30 für die erste Stabilisatorwelle 31. Auf dem einen Ende der Stabilisatorwelle 31 ist ein weiteres Stirnrad 32 des Stirnradtriebes 27 drehfest angeordnet. Zwischen den Stirnrädern 28 und 32 sind die miteinander und mit diesen kämmenden Zwischenstirnräder 33 des Stirnradtriebes 27 angeordnet. An dem anderen Ende der Stabilisatorwelle 31 ist das andere Stabilisatorelement 26 über das Kardangelenk 34 drehfest angeordnet. Dieses Stabilisatorelement 26 besteht aus dem teleskopierenbaren Teil 35, welches mittels der Kardengelenken 34 und 35 jeweils drehfest mit der ersten Stabilisatorwelle 31 und der in dem weiteren Anbaubock 21 gelagerten zweiten Stabilisatorwelle 37 verbunden ist. An dem anderen Ende der zweiten Stabilisatorwelle 37 ist der Stützrahmen 38 des Stützrades 19 drehfest und tragfähig verbunden.

Der allgemein mit 24 bezifferte Stabilisator hat ein erstes 25 und zweites Stabilisatorelement 26, das sich im Wesentlichen geradlinig erstreckt. Dieses erstreckt sich mit seitlichem Lageabstand in der gezeigten Betriebsstellung in Fig. 1 seitlich neben dem Pflugrahmen 6, und hat ein etwa übereinstimmendes Höhenniveau zum Erdboden, so dass sich dieses Stabilisatorelement 24 im Wesentlichen seitlich neben und in einer übereinstimmenden mittleren Ebene bei übereinstimmendem Höhenniveau neben dem Pflugrahmen 6 erstreckt.

Während des Drehvorganges des Pfluges 1 dreht sich das zweite Stirnrad 32 mit den Zwischenrädern 33 um zentrale, am Anbaubock 2 angeordnete drehfest Stirnrad 28, so dass das Zahnrad 33 mit dem Pflugrahmen 6 um das Stabilisatorelement 24 und das Fahrgestell 20 und das Stützrad 19 verschwenkt werden können, wobei sich die Zahnräder 32 und 33 drehen können und die Stabilisierungswirkung für das Stützrad 19 gegenüber dem Pflugrahmen 6 über den Sirnradtrieb 35 vorhanden ist und erhalten bleibt. Diese D Bewegung des Pflugrahmens 6 mit den Pflugscharen 9 wird über die Hydraulik-Zylinder 17 und 18 gesteuert, so dass durch das Stabilisierungselementes 24 mit den Teilen 25 und 26 hinreichende Bodenfreiheit besteht und auch eine genügende Bodenfreiheit für einen entsprechenden Wendevorgang des Pflugrahmens

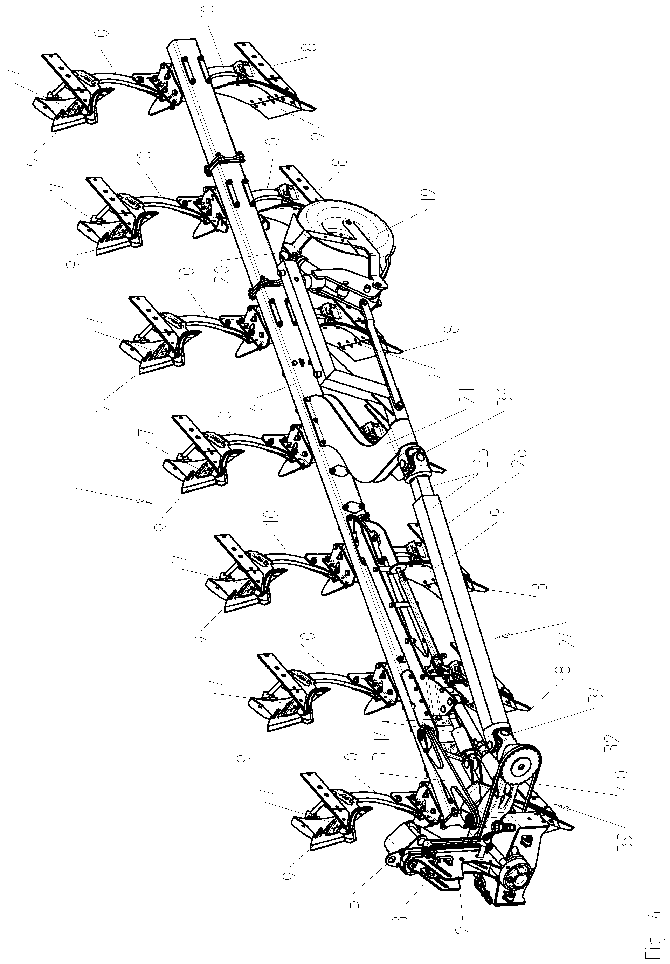

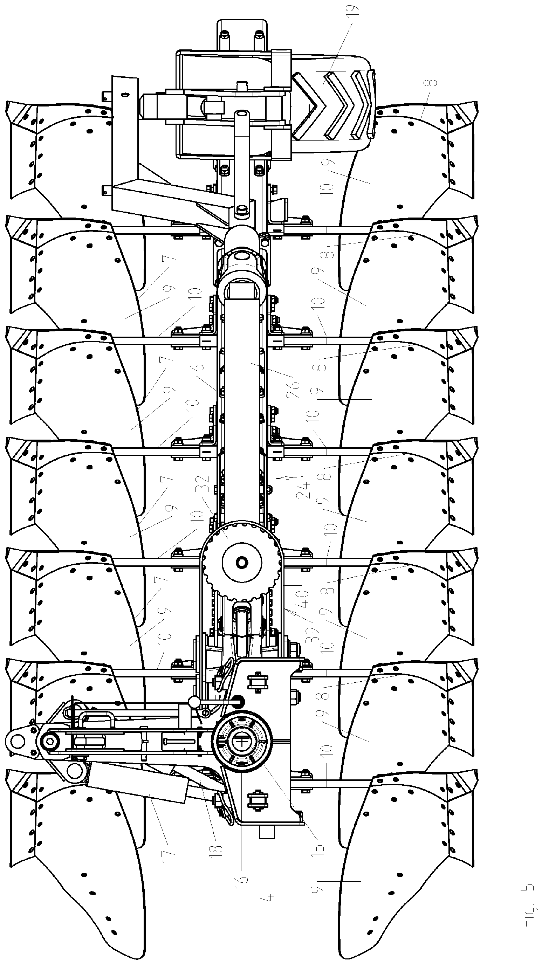

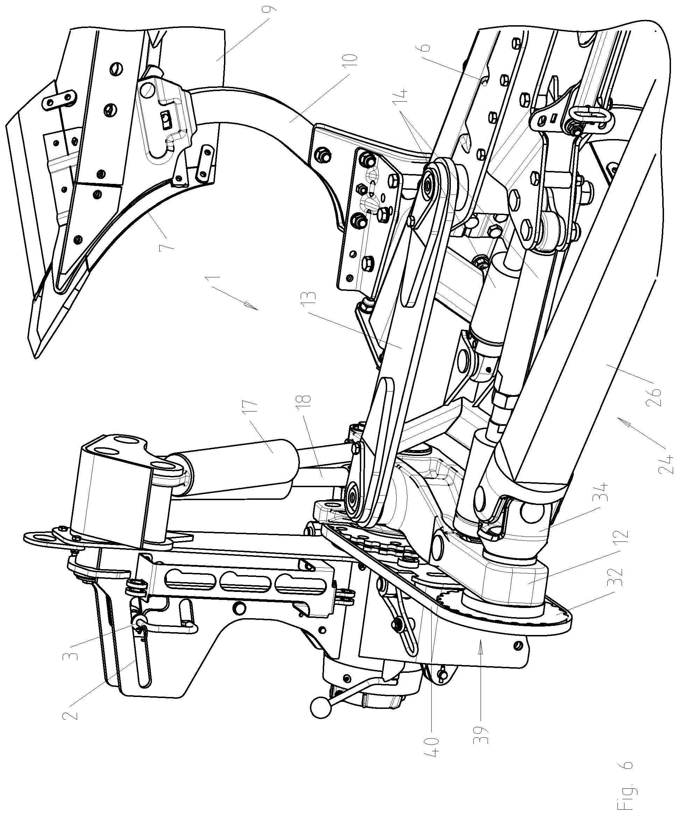

Das Ausführungsbeispiel gemäß den Fig. 4 bis 6 unterscheidet sich vom dem Ausführungsbeispiel Fig. 1 bis 3 dadurch, dass der Stirnradtrieb 25 durch einen Ketten- oder Zahnradtrieb 39 ersetzt worden ist. Hierbei übernimmt die Kette oder der Zahnriemen 40 die Funktion der Zwischenstirnräder 33.

## Patentansprüche

1. Drehpflug (1) mit einem an einem Anbaubock (2) zur Verbindung des Drehpfluges (1) mit einem landwirtschaftlichen Zugfahrzeug abstützbaren dreh- und/oder schwenkbar ausgebildeten Pflugrahmen (6) und mit auf gegenüberliegenden Seiten des Pflugrahmens (6) angeordneten Pflugscharreihen (7, 8) mit Pflugkörpern (9), wobei durch eine über eine Antriebsvorrichtung eingeleitete Drehbewegung des Pflugrahmens (6) wahlweise die eine oder die andere Pflugscharreihe (7, 8) in ihre Betriebsstellung oder in ihre Außerbetriebsstellung überführbar ist und mit einem den Pflugrahmen (6) in der Betriebsstellung der einen Pflugscharreihe (7, 8) und den Pflugrahmen (6) in der Betriebsstellung der anderen Pflugscharreihe (7, 8) auf dem Erdboden abstützenden, über ein Fahrgestell (20) mit dem Pflugrahmen (6) verbundenen Stützrad (19), wobei das Fahrgestell (20) des Stützrades (19) über einen Stabilisator (24) mit dem Anbaubock (2) verbunden ist und der Pflugrahmen (6) um eine Dreh- oder Schwenkachse um den Stabilisator (24), das Fahrgestell (20) und das Stützrad (19) verschwenkbar ist, **dadurch gekennzeichnet, dass** der Stabilisator zweigeteilt ausgebildet ist mit einem geradlinig ausgebildeten Stabilisatorelement (24) mit einem einen Stirnrad-, Ketten- oder Riementrieb aufweisenden Stabilisatorteil (25) ausgebildet ist, wobei das Stabilisatorelement (26) und das Stabilisatorteil (25) in etwa einen übereinstimmenden Höhenabstand zum Erdboden wie der Pflugrahmen (6) in der Arbeitsstellung der Schare (9) aufweisen.

2. Drehpflug nach Anspruch 1, **dadurch gekennzeichnet, dass** das Stabilisatorelement (26) als starres Stabilisatorelement ausgebildet ist und mit seitlichem Lageabstand neben dem die Pflugscharreihen (7, 8) tragenden Pflugrahmen (6) in der Betriebsstellung der Teile angeordnet ist.

3. Drehpflug nach Anspruch 1 oder 2, **dadurch gekennzeichnet, dass** das Stabilisatorelement (26) an einem Auslegerarm (12) des Pflugrahmens (6) über ein Kreuz- oder Kugelgelenk , insbesondere Kardangelenk (34) angreift und an dem Anbaubock (2) diametral dem Gelenk (34) gegenüberliegend angeordnet ein Teil des Stirnrad-, Riemen- oder Kettentriebes (27, 39) vorgesehen ist.

4. Drehpflug nach einem der Ansprüche 1 bis 3, **dadurch gekennzeichnet, dass** der Stirnrad-, Riemen- oder Kettentrieb (27, 39) zumindest zwei mit Abstand zueinander angeordnete Zahnräder (28, 32, 33) aufweist, wobei eines der Zahnräder (32) mit dem Pflugrahmen (6) um die Dreh- bzw. Schwenkachse bei Verschwenken des Pflugrahmens (6) mit verschwenkt wird.

5. Drehpflug nach einem der Ansprüche 1 bis 4, **dadurch gekennzeichnet, dass** die Zahnräder (28, 32) über Stirnräder (33), eine Zahnkette oder einen Zahnriemen (40) miteinander in Antriebsverbindung und/oder verbunden sind und eines der Zahnräder (32) dem Stabilisatorelement (24) und ein anderes Zahnrad (28) dem Anbaubock (2) zugeordnet ist.

## Claims

1. Reversible plough (1) with a plough frame (6) which is supportable on a headstock frame (2) for connecting the reversible plough (1) to an agricultural tractor and is of rotatable and/or pivotable design, and with rows of ploughshares (7, 8) which are arranged on opposite sides of the plough frame (6) and have plough bodies (9), wherein, by means of a rotational movement of the plough frame (6) initiated via a driving device, either the one or the other row of ploughshares (7, 8) is transferable into the operating position thereof or into the non-operating position thereof, and with a supporting wheel (19) which supports the plough frame (6) on the ground in the operating position of the one row of ploughshares (7, 8) and supports the plough frame (6) on the ground in the operating position of the other row of plough-shares (7, 8) and is connected to the plough frame (6) via a chassis (20), wherein the chassis (20) of the supporting wheel (19) is connected to the headstock frame (2) via a stabilizer (24), and the plough frame (6) is pivotable about a rotation axis or pivot axis about the stabilizer (24), the chassis (20) and the supporting wheel (19), **characterized in that** the stabilizer is formed in two parts, is formed with a stabilizer element (24) of rectilinear design, with a stabilizer part (25) having a spur gear drive, chain drive or belt drive, wherein the stabilizer element (26) and the stabilizer part (25) have approximately a corresponding vertical distance from the ground as the plough frame (6) in the working position of the shares (9).

2. Reversible plough according to Claim 1, **characterized in that** the stabilizer element (26) is designed as a rigid stabilizer element and, in the operating position of the parts, is arranged at a lateral positional distance next to the plough frame (6) bearing the rows of ploughshares (7, 8).

3. Reversible plough according to Claim 1 or 2, **characterized in that** the stabilizer element (26) acts on an extension arm (12) of the plough frame (6) via a universal joint or ball and socket joint, in particular cardanic joint (34), and part of the spur gear drive, belt drive or chain drive (27, 39) is provided on the headstock frame (2) in a manner arranged diametrically opposite the joint (34).

4. Reversible plough according to one of Claims 1 to 3, **characterized in that** the spur gear drive, belt drive or chain drive (27, 39) has at least two gear wheels (28, 32, 33) arranged at a distance from one another, wherein one of the gear wheels (32) is pivoted with the plough frame (6) about the rotation axis or pivot axis during the pivoting of the plough frame (6).

5. Reversible plough according to one of Claims 1 to 4, **characterized in that** the gear wheels (28, 32) are in drive connection and/or are connected to one another via spur gears (33), a toothed chain or a toothed belt (40), and one of the gear wheels (32) is assigned to the stabilizer element (24) and another gear wheel (28) is assigned to the headstock frame (2).

## Revendications

1. Charrue brabant (1) avec un châssis de charrue (6) de type tournant et/ou pivotant pouvant s'appuyer sur un support d'attelage (2) pour la liaison de la charrue brabant (1) à un véhicule de traction agricole, et avec des rangées de socs (7, 8) avec des corps de charrue (9) disposées sur des côtés opposés du châssis de charrue (6), dans laquelle l'une ou l'autre rangée de socs (7, 8) peut au choix être amenée dans sa position de travail ou dans sa position de repos par un mouvement de rotation du châssis de charrue (6) généré par un dispositif d'entraînement, et avec une roue d'appui (19) reliée au châssis de charrue (6) par un train de roulage (20) et appuyant sur le sol le châssis de charrue (6) dans la position de travail d'une première rangée de socs (7, 8) et le châssis de charrue (6) dans la position de travail de l'autre rangée de socs (7, 8), dans laquelle le train de roulage (20) de la roue d'appui (19) est relié au support d'attelage (2) par un stabilisateur (24) et le châssis de charrue (6) peut pivoter autour d'un axe de rotation ou de pivotement autour du stabilisateur (24), du train de roulage (20) et de la roue d'appui (19), **caractérisée en ce que** le stabilisateur est réalisé en deux parties est réalisé avec un élément de stabilisateur (24) réalisé en ligne droite avec une partie de stabilisateur (25) présentant une commande par engrenages droits, par chaîne ou par courroie, dans laquelle l'élément de stabilisateur (26) et la partie de stabilisateur (25) présentent une distance en hauteur par rapport au sol sensiblement correspondante à celle du châssis de charrue (6) dans la position de travail des socs (9).

2. Charrue brabant selon la revendication 1, **caractérisée en ce que** l'élément de stabilisateur (26) est constitué par un élément de stabilisateur rigide et est agencé avec une distance de positionnement latérale à côté du châssis de charrue (6) portant les rangées de socs (7, 8) dans la position de travail des parties.

3. Charrue brabant selon la revendication 1 ou 2, **caractérisée en ce que** l'élément de stabilisateur (26) est connecté à un bras latéral (12) du châssis de charrue (6) au moyen d'un joint à croisillon ou d'un joint à rotule, en particulier d'un joint à cardan (34) et il est prévu sur le support d'attelage (2), en position diamétralement opposée au joint (34), une partie de la commande par engrenages droits, par chaîne ou par courroie (27, 39).

4. Charrue brabant selon l'une quelconque des revendications 1 à 3, **caractérisée en ce que** la commande par engrenages droits, par courroie ou par chaîne (27, 39) présente au moins deux roues dentées (28, 32, 33) placées à distance l'une de l'autre, dans laquelle une des roues dentées (32) pivote avec le châssis de charrue (6) autour de l'axe de rotation ou de pivotement lors du pivotement du châssis de charrue (6).

5. Charrue brabant selon l'une quelconque des revendications 1 à 4, **caractérisée en ce que** les roues dentées (28, 32) sont reliées l'une à l'autre en relation d'entraînement par des engrenages droits (33), une chaîne dentée ou une courroie dentée (40) et une des roues dentées (32) est associée à l'élément de stabilisateur (24) et une autre roue dentée (28) est associée au support d'attelage (2).
